# EUROPÄISCHE PATENTANMELDUNG

(11) **EP 1 516 760 A2**
(43) Veröffentlichungstag der Anmeldung: **23.03.2005**
(21) Anmeldenummer: 04021900.8
(22) Anmeldetag: 15.09.2004
(51) Int. Cl.: B60H 1/00, B60H 1/32

(54) **System zum Heizen und Kühlen eines Innenraums eines Fahrzeugs**

(30) Priorität: 18.09.2003 DE 10343225
(71) Anmelder: Webasto AG, 82131 Stockdorf (DE)
(72) Erfinder: Horn, Oliver, 81475 München (DE); Krämer, Wolfgang, 81479 München (DE); Khelifa, Noureddine, Dr., 80637 München (DE)

(57) **Zusammenfassung**

Die Erfindung betrifft ein System zum Heizen und Kühlen eines Innenraums eines Fahrzeugs, mit einem ersten Klimagerät (10), das dazu vorgesehen ist, einen vorderen Bereich des Innenraums zu heizen oder zu kühlen, und mit einem zweiten Klimagerät (12), das dazu vorgesehen ist, einen hinteren Bereich des Innenraums zu heizen oder zu kühlen, wobei in dem ersten Klimagerät (10) ein mit einem Kältekreis verbindbarer erster Verdampfer (14) und in dem zweiten Klimagerät (12) ein mit dem Kältekreis verbindbarer zweiter Verdampfer (16) vorgesehen ist.

Erfindungsgemäß ist vorgesehen, dass in dem zweiten Klimagerät (12) weiterhin ein erster Wärmetauscher (18) vorgesehen ist, der über einen Wärmeträgerkreis (30) mit einem Latentspeicher (20) in Verbindung steht, der von einem mit dem Kältekreis verbindbaren dritten Verdampfer (22) mit Kälte geladen werden kann.

## Beschreibung

Die Erfindung betrifft ein System zum Heizen und Kühlen eines Innenraums eines Fahrzeugs, mit einem ersten Klimagerät, das dazu vorgesehen ist, einen vorderen Bereich des Innenraums zu heizen oder zu kühlen, und mit einem zweiten Klimagerät, das dazu vorgesehen ist, einen hinteren Bereich des Innenraums zu heizen oder zu kühlen, wobei in dem ersten Klimagerät ein mit einem Kältekreis verbindbarer erster Verdampfer und in dem zweiten Klimagerät ein mit dem Kältekreis verbindbarer zweiter Verdampfer vorgesehen ist.

Die genannten Klimageräte werden auch als Klimaboxen oder HVACs ("Heat Ventilation Air Condition") bezeichnet.

Im Zusammenhang mit Personenkraftwagen werden die gattungsgemäßen Systeme derzeit insbesondere auf dem amerikanischen Markt eingesetzt. Die gattungsgemäßen Systeme können jedoch auch zur Klimatisierung von Fahrerhäusern von Nutzfahrzeugen eingesetzt werden, insbesondere bei Fahrerhäusern, die einen Fahrerbereich, einen Beifahrerbereich und einen Liegenbereich aufweisen. In diesem Fall kann das erste Klimagerät dem Fahrer- und Beifahrerbereich zugeordnet werden, während das zweite Klimagerät dem Liegenbereich zugeordnet werden kann.

Der Erfindung liegt die Aufgabe zugrunde, die gattungsgemäßen Systeme derart weiterzubilden, dass sowohl eine wirksame Klimatisierung des hinteren Bereichs im Fahrbetrieb als auch eine Standklimatisierung zumindest des hinteren Bereichs ermöglicht wird.

Diese Aufgabe wird durch die Merkmale des Anspruchs 1 gelöst.

Vorteilhafte Weiterbildungen und Ausgestaltungen der Erfindung ergeben sich aus den abhängigen Ansprüchen.

Das erfindungsgemäße System baut auf dem gattungsgemäßen Stand der Technik dadurch auf, dass in dem zweiten Klimagerät weiterhin ein erster Wärmetauscher vorgesehen ist, der über einen Wärmeträgerkreis mit einem Latentspeicher in Verbindung steht, der von einem mit dem Kältekreis verbindbaren dritten Verdampfer mit Kälte geladen werden kann. Die Erfindung ermöglicht es insbesondere, den hinteren Bereich des Innenraums im Fahrbetrieb wirksam zu kühlen, indem an dem zweiten Verdampfer frei werdende Kälte auf einen entsprechenden Luftstrom übertragen wird. Weiterhin ermöglicht es die Erfindung, den hinteren Bereich des Innenraums im Standbetrieb zu kühlen, indem in dem Latentspeicher gespeicherte Kälte über den ersten Wärmetauscher auf einen entsprechenden Luftstrom übertragen wird. Darüber hinaus ist es möglich, im sogenannten Pull-Down-Betrieb sowohl an dem zweiten Verdampfer freiwerdende Kälte als auch in dem Latentspeicher gespeicherte Kälte zur Kühlung des hinteren Bereichs des Innenraums auf einen Luftstrom zu übertragen. Obwohl die Erfindung in besonders vorteilhafter Weise im Zusammenhang mit Nutzfahrzeugen eingesetzt werden kann, ist sie nicht auf diesen Einsatzbereich beschränkt, sondern kann auch im Zusammenhang mit Personenkraftwagen verwendet werden. In diesem Fall werden vorzugsweise zusätzliche Maßnahmen getroffen, um auch eine Standklimatisierung des vorderen Bereichs des Innenraums zu ermöglichen. Beispielsweise kann zu diesem Zweck in dem ersten Klimagerät ein weiterer Wärmetauscher angeordnet werden, der ebenfalls in den Wärmeträgerkreis eingebunden ist oder der mit einem weiteren Latentspeicher zusammenwirkt.

Bei bevorzugten Ausführungsformen des erfindungsgemäßen Systems ist vorgesehen, dass aus der Gruppe des ersten Verdampfers, des zweiten Verdampfers und des dritten Verdampfers zumindest zwei Verdampfer bezogen auf eine Kältemittelströmungsrichtung parallel angeordnet sind. Insbesondere wenn jedem Verdampfer ein separates Expansionsorgan zugeordnet ist, ermöglicht es eine derartige Anordnung, die zumindest zwei parallel angeordneten Verdampfer unabhängig zu betreiben, wobei zu diesem Zweck geeignete Ventileinrichtungen vorgesehen sein können.

In diesem Zusammenhang wird es als besonders vorteilhaft erachtet, wenn vorgesehen ist, dass der erste Verdampfer, der zweite Verdampfer und der dritte Verdampfer bezogen auf eine Kältemittelströmungsrichtung parallel angeordnet sind. In diesem Fall sind vorzugsweise alle Verdampfer unabhängig voneinander betreibbar.

Das erfindungsgemäße System kann in vorteilhafter Weise dadurch weitergebildet sein, dass der erste Wärmetauscher und der zweite Verdampfer bezogen auf eine Luftströmungsrichtung in Reihe angeordnet sind. Eine derartige Anordnung ermöglicht es beispielsweise, eine besonders starke Abkühlung von sowohl den ersten Wärmetauscher als auch den zweiten Verdampfer durchströmender Luft zu erzielen, beispielsweise im Pull-Down-Betrieb.

Bei bestimmten Ausführungsformen des erfindungsgemäßen Systems kann weiterhin vorgesehen sein, dass zum Beheizen des hinteren Bereichs ein Luftheizgerät vorgesehen ist. Das Luftheizgerät kann insbesondere elektrisch oder mit Brennstoff betrieben werden.

In diesem Zusammenhang wird bevorzugt, dass das Luftheizgerät dem zweiten Klimagerät zugeordnet ist. Insbesondere im Falle eines elektrischen Luftheizgerätes ist es möglich, das gesamte Luftheizgerät aufgrund des geringen Platzbedarfs in dem zweiten Klimagerät anzuordnen.

Das erfindungsgemäße System kann in vorteilhafter Weise auch dadurch weitergebildet sein, dass es den ersten Wärmetauscher zum Beheizen des hinteren Bereichs verwenden kann. Da der erste Wärmetauscher in diesem Fall wahlweise zur Erwärmung oder zur Abkühlung von ihn durchströmender Luft verwendet werden kann, ist wärmeträgerkreisseitig vorzugsweise eine Ventilanordnung vorgesehen, über die der erste Wärmetauscher in Abhängigkeit von der jeweiligen Betriebsart in jeweils geeigneter Weise mit weiteren Systemkomponenten gekoppelt werden kann.

Weiterhin kommen Ausführungsformen in Betracht, bei denen vorgesehen ist, dass in dem zweiten Klimagerät ein dritter Wärmetauscher zum Beheizen des hinteren Bereichs vorgesehen ist. Diese Lösung ist beispielsweise vorteilhaft, wenn der hintere Bereich (auch) mit Motorabwärme, das heißt über das Kühlmittel, beheizbar sein soll, es jedoch unerwünscht ist, das Kühlmittel durch den Latentspeicher strömen zu lassen, beispielsweise um Ablagerungen im Latentspeicher sicher vermeiden zu können.

Im Rahmen der Erfindung kommen ebenfalls Lösungen in Betracht, bei denen vorgesehen ist, dass zum Beheizen des hinteren Bereichs ein Wärmeträgerheizgerät vorgesehen ist, das in den Wärmeträgerkreis einbindbar ist. Auch bei dem Wärmeträgerheizgerät kann es sich insbesondere um ein elektrisch oder mit Kraftstoff betriebenes Wärmeträgerheizgerät handeln. Der Einsatz eines Wärmeträgerheizgerätes ist in besonders einfacher Weise möglich, wenn der erste Wärmetauscher zum Beheizen des hinteren Bereichs verwendet werden kann.

Weiterhin werden Ausführungsformen des erfindungsgemäßen Systems als vorteilhaft erachtet, bei denen vorgesehen ist, dass es einem Motorkühlkreis zum Beheizen des hinteren Bereichs Wärme entziehen kann. Auch in diesem Zusammenhang ist es besonders effizient, wenn der erste Wärmetauscher zum Beheizen des hinteren Bereichs verwendet werden kann, also mit dem Motorkühlkreis koppelbar ist.

Eine besonders bevorzugte Weiterbildung des erfindungsgemäßen Systems sieht vor, dass in dem Latentspeicher wahlweise Wärme oder Kälte gespeichert werden kann, und dass in dem Latentspeicher gespeicherte Wärme zum beheizen des hinteren Bereichs verwendet werden kann. Sofern die in dem Latent speicher gespeicherte Wärme zum Beheizen des hinteren Bereichs nicht ausreichend sein sollte, kann diese Wärme jedoch in vorteilhafter Weise genutzt werden, um beispielsweise die Vorlauftemperatur eines Wärmeträgerheizgerätes zu erhöhen, das dadurch mit geringerer Leistung betrieben werden kann.

Im vorstehend erläuterten Zusammenhang wird es als besonders vorteilhaft erachtet, wenn vorgesehen ist, dass der Latentspeicher zur Speicherung von Wärme mit einem Motorkühlkreis koppelbar ist. Auf diese Weise kann ansonsten nutzlos an die Umgebung abgegebene Motorabwärme beispielsweise zum Standheizbetrieb genutzt werden.

Insbesondere im vorstehend erläuterten Zusammenhang ist vorzugsweise weiterhin vorgesehen, dass der Latentspeicher einen zweiten Wärmetauscher enthält, über den wahlweise Wärme zugeführt, Wärme abgeführt oder Kälte abgeführt werden kann. Der zweite Wärmetauscher steht dabei vorzugsweise mit einer Ventilanordnung in Verbindung, über die der zweite Wärmetauscher in der jeweils geeigneten Weise mit anderen Systemkomponenten gekoppelt werden kann.

Ein wesentlicher Grundgedanke der Erfindung besteht darin, dass es vorteilhaft ist, in dem dem hinteren Bereich zugeordneten zweiten Klimagerät sowohl den zweiten Verdampfer als auch den ersten Wärmetauscher vorzusehen, um im Fahrbetrieb wie auch im Standbetrieb eine optimale Klimatisierung zu erzielen, was beispielsweise mit Systemen, bei denen das zweite Klimagerät keinen eigenen Verdampfer aufweist, nicht ohne weiteres möglich ist.

Die Erfindung wird nun unter Bezugnahme auf die beigefügten Zeichnungen anhand von bevorzugten Ausführungsformen beispielhaft erläutert.

Es zeigen:
- Figur 1: eine schematische Darstellung einer ersten Ausführungsform des erfindungsgemäßen Systems,
- Figur 2: eine schematische Darstellung einer zweiten Ausführungsform des erfindungsgemäßen Systems,
- Figur 3: eine schematische Darstellung einer dritten Ausführungsform des erfindungsgemäßen Systems,
- Figur 4: eine schematische Darstellung einer vierten Ausführungsform des erfindungsgemäßen Systems, und
- Figur 5: eine schematische Darstellung einer fünften Ausführungsform des erfindungsgemäßen Systems.

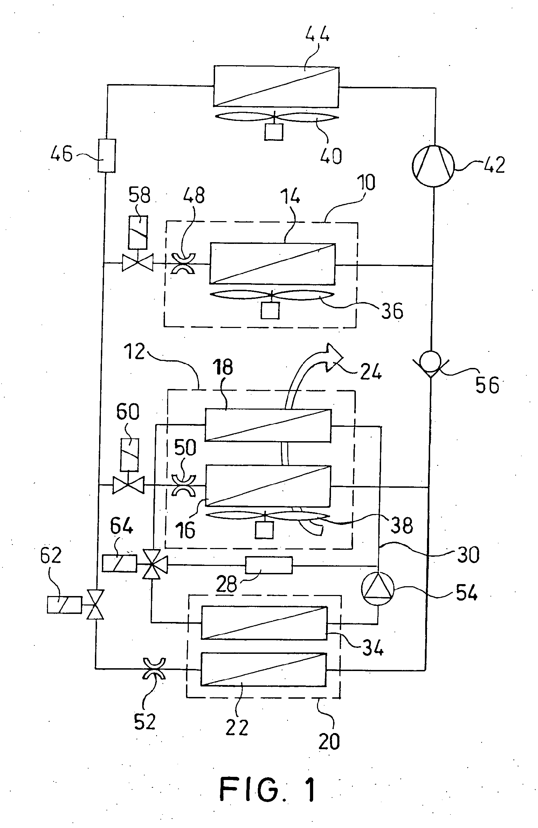

Figur 1 zeigt eine erste Ausführungsform des erfindungsgemäßen Systems. Ein Kompressor 42, ein Kondensator 44 mit einem zugeordneten Kondensatorgebläse 40, ein Sammler/Trockner 46, ein erstes Ventil 58, ein erstes Expansionsorgan 48 sowie ein erster Verdampfer 14 mit einem diesem zugeordneten ersten Gebläse 36 bilden in an sich bekannter Weise einen Kompressionskältekreis. Der erste Verdampfer 14 ist zusammen mit dem ersten Gebläse 36 in einem ersten Klimagerät 10 angeordnet, in dem üblicherweise weitere nicht dargestellte Komponenten, wie beispielsweise Heizungswärmetauscher, vorgesehen sind. Das erste Klimagerät 10 ist im vorderen Bereich des Innenraums angeordnet, wobei ein von dem ersten Gebläse 36 erzeugter Luftstrom über den ersten Verdampfer 14 gekühlt werden kann. Der in Figur 1 dargestellte Kompressionskältekreis umfasst weiterhin einen zweiten Verdampfer 16, wobei diesem zweiten Verdampfer 16 ein zweites Expansionsorgan 50, ein zweites Ventil 60 sowie ein zweites Gebläse 38 zugeordnet sind. Der zweite Verdampfer 16 ist, bezogen auf die Kältemittelströmung, parallel zu dem ersten Verdampfer 14 angeordnet, wobei zwischen dem Auslass des ersten Verdampfers 14 und dem Auslass des zweiten Verdampfers 16 ein Rückschlagventil 56 vor gesehen ist. Der zweite Verdampfer 16 ist in einem zweiten Klimagerät 12 untergebracht, das dem hinteren Bereich des Innenraums des Fahrzeugs zugeordnet ist, so dass bei laufendem Kompressor 42 ein von dem zweiten Gebläse 38 in der Luftströmungsrichtung 24 erzeugter Luftstrom über den zweiten Verdampfer 16 abgekühlt werden kann. Weiterhin umfasst der in Figur 1 dargestellte Kompressionskältekreis einen dritten Verdampfer 22, dem ein drittes Expansionsorgan 52 sowie ein drittes Ventil 62 zugeordnet ist. Der dritte Verdampfer 22 ist, bezogen auf die Kältemittelströmung, ebenfalls parallel zum ersten Verdampfer 14 und somit auch parallel zum zweiten Verdampfer 16 angeordnet. Der dritte Verdampfer 22 ist in einem Latentspeicher 20 untergebracht, in dem an dem dritten Verdampfer 22 freiwerdende Kälte gespeichert werden kann. Mit Hilfe des ersten Ventils 58, des zweiten Ventils 60 und des dritten Ventils 62 ist es möglich, jeweils nur den oder die Verdampfer zu betreiben, die gerade benötigt werden.

Zusätzlich zu dem vorstehend beschriebenen Kältekreis weist das System gemäß Figur 1 einen Wärmeträgerkreis 30 auf, wobei als Wärmeträger beispielsweise ein Wasser/Glykol-Gemisch in Betracht kommt. Bestandteil des in Figur 1 dargestellten Wärmeträgerkreises 30 ist ein in dem zweiten Klimagerät 12 bezogen auf die Luftströmung in Reihe zu dem zweiten Verdampfer 16 angeordneter erster Wärmetauscher 18, ein in dem Latentspeicher 20 angeordneter zweiter Wärmetauscher 34, eine Wärmeträgerpumpe 54, ein beispielsweise elektrisch betriebenes Wärmeträgerheizgerät 28 sowie ein erstes Wärmeträgerventil 64. Das erste Wärmeträgerventil 64 kann ebenso wie alle anderen im System vorhandenen Ventile beispielsweise durch ein Magnetventil gebildet sein.

Das System gemäß Figur 1 ermöglicht es, im Fahrbetrieb, das heißt wenn der Kompressor 42 läuft, den vorderen Bereich des Innenraums über den ersten Verdampfer 14 und den hinteren Bereich des Innenraums über den zweiten Verdampfer 16 zu kühlen. Gleichzeitig kann der Latentspeicher 20 mit Kälte beladen werden. Dies ist selbstverständlich ebenfalls möglich wenn keiner oder nur einer des ersten Verdampfers 14 und des zweiten Verdampfers 16 aktiv ist. Insbesondere im Standbetrieb, das heißt bei abgeschaltetem Kompressor 42, kann in einer ersten Arbeitsstellung des ersten Wärmeträgerventils 64 ein Wärmeträgerkreis ausgehend von der aktiven Wärmeträgerpumpe 54, durch den ersten Wärmetauscher 18, durch das erste Wärmeträgerventil 64 zu dem zweiten Wärmetauscher 34 und zurück zur Wärmeträgerpumpe 54 gebildet werden. Somit kann insbesondere im Standbetrieb in dem Latentspeicher 20 gespeicherte Kälte über den ersten Wärmetauscher 18 an den hinteren Bereich des Innenraums abgegeben werden. In einer zweiten Arbeitsstellung des ersten Wärmeträgerventils 64 wird ein Wärmeträgerheizgerät 28 in den Wärmekreis eingebunden, wobei das Wärmeträgerheizgerät 28 mit einer eigenen nicht dargestellten Pumpe ausgestattet ist. In diesem Fall wird der Wärmeträgerkreis ausgehend von dem Wärmeträgerheizgerät 28 durch den ersten Wärmetauscher 18, durch das erste Wärmeträgerventil 64 und zurück zum Wärmeträgerheizgerät 28 gebildet, so dass dem hinteren Bereich des Innenraums über den ersten Wärmetauscher 18 Wärme zugeführt werden kann.

Das in Figur 1 dargestellte System ermöglicht es, den hinteren Bereich während der Fahrt über den zweiten Verdampfer zu kühlen. Beim Heizbetrieb wird ein effizientes Heizen durch die Bildung eines Inselkreises möglich. Weiterhin erfordert die Integration des Latentspeichers in den Kältekreis nur wenig Modifikationen bei bekannten Systemen, da im Prinzip bis zum Verdampfer der Heckanlage keine Änderungen erforderlich sind.

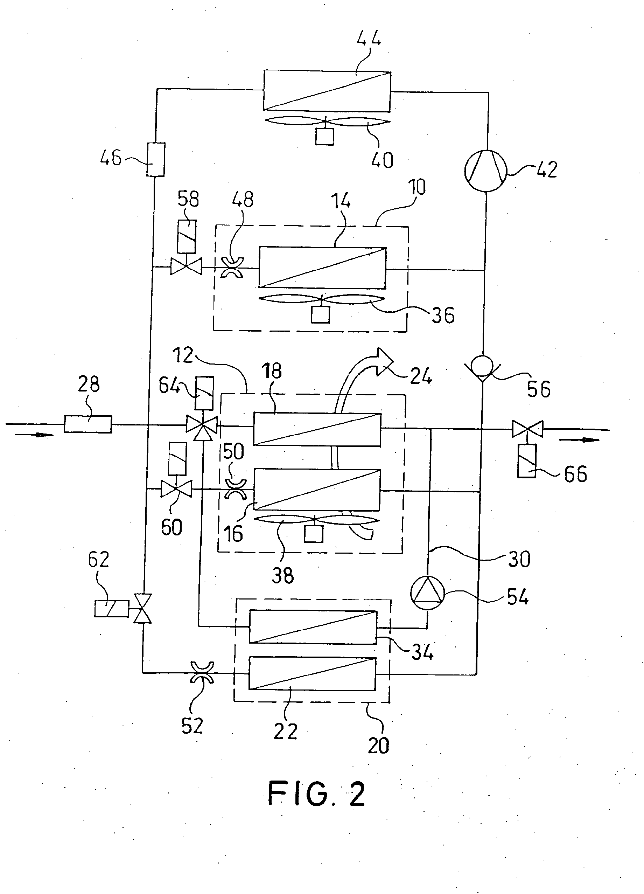

Figur 2 zeigt eine zweite Ausführungsform des erfindungsgemäßen Systems. Der Kältekreis des in Figur 2 dargestellten Systems entspricht dem Kältekreis des Systems von Figur 1 und wird daher nicht erneut erläutert.

Der Wärmeträgerkreis 30 des Systems gemäß Figur 2 unterscheidet sich dadurch von dem Wärmeträgerkreis des Systems gemäß Figur 1, dass zum Heizen des hinteren Bereichs kein Inselkreis gebildet, sondern auf einen externen Heizkreis zurückgegriffen wird, der im dargestellten Fall ein Wärmeträgerheiz gerät 28 und ein zweites Wärmeträgerventil 66 umfasst. Im Heizbetrieb wird das erste Wärmeträgerventil 64 in eine Arbeitsstellung gebracht, in der der aus dem Wärmeträgerheizgerät austretende Wärmeträger durch das erste Wärmeträgerventil 64, durch den ersten Wärmetauscher 18 und durch das geöffnete zweite Wärmeträgerventil 66 strömen kann.

Das Beladen und Entladen des Latentspeichers 20 mit Kälte erfolgt wie bei dem System gemäß Figur 1 und wird daher nicht erneut erläutert.

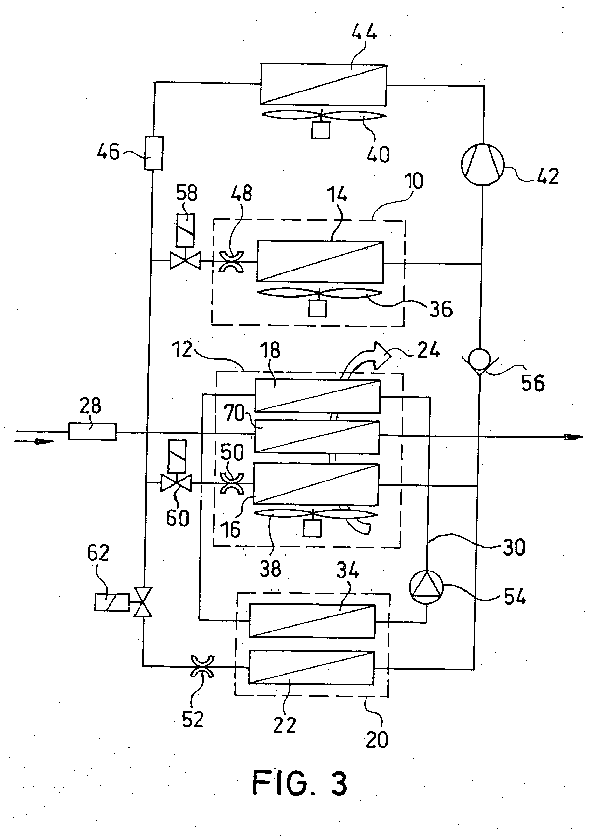

Figur 3 zeigt eine dritte Ausführungsform des erfindungsgemäßen Systems. Der Kältekreis des Systems gemäß Figur 3 entspricht dem Kältekreis des Systems von Figur 1 und wird daher nicht erneut erläutert.

Der Wärmeträgerkreis 30 des Systems von Figur 3 unterscheidet sich dadurch von dem Wärmeträgerkreis des Systems von Figur 2, dass für den Heizbetrieb ein separater dritter Wärmetauscher 70 in dem zweiten Klimagerät 12 vorgesehen ist, wobei dieser dritte Wärmetauscher 70 von einem Wärmeträgerheizgerät 28 gespeist wird. Bei dieser Lösung kann auf zusätzliche Ventile im Wärmeträgerkreis verzichtet werden.

Das Be- und Entladen des Latentspeichers 20 mit Kälte erfolgt bei dem in Figur 3 dargestellten System wie bei dem System von Figur 1 und wird daher nicht erneut erläutert.

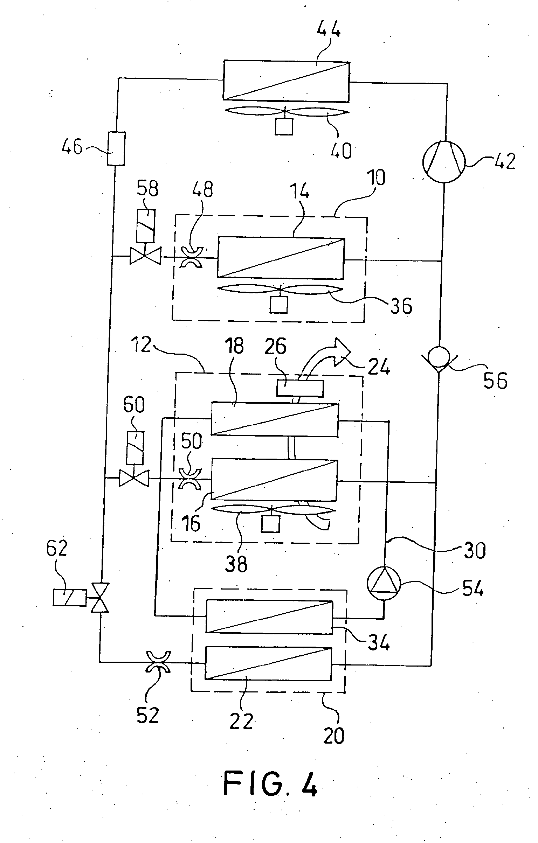

Figur 4 zeigt eine vierte Ausführungsform des erfindungsgemäßen Systems. Der Kältekreis des in Figur 4 dargestellten Systems entspricht dem Kältekreis des Systems von Figur 1 und wird daher nicht erneut erläutert.

Der Wärmeträgerkreis 30 des Systems gemäß Figur 4 unterscheidet sich dadurch von den vorstehend erläuterten Ausführungsformen, dass er nicht zum Heizen ausgelegt ist. Um den hinteren Bereich des Innenraums mit dem System gemäß Figur 4 trotzdem beheizen zu können, ist, bezogen auf die Luft strömungsrichtung 24, hinter dem ersten Wärmetauscher 18 ein Luftheizgerät 26 angeordnet, mit dem der von dem zweiten Gebläse 38 erzeugte Luftstrom bei Bedarf erwärmt werden kann. Da der Wärmeträgerkreis 30 bei dieser Ausführungsform nur zum Entladen des Latentspeichers 20 vorgesehen ist, kann in diesem Fall auf Wärmeträgerventile verzichtet werden.

Das Be- und Entladen des Latentspeichers 20 mit Kälte erfolgt bei dem in Figur 4 dargestellten System wie bei dem in Figur 1 dargestellten System und wird daher nicht erneut erläutert.

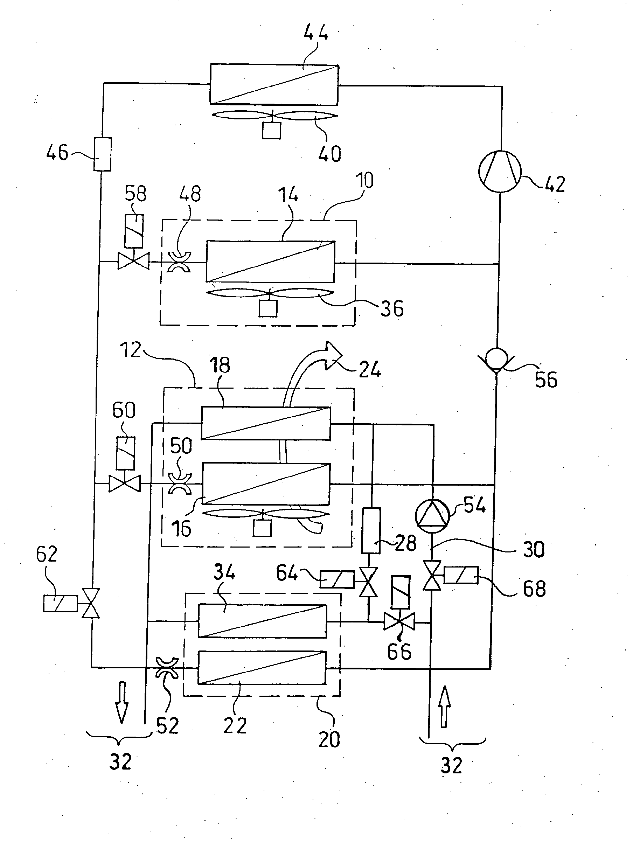

Figur 5 zeigt eine fünfte Ausführungsform des erfindungsgemäßen Systems. Der Kältekreis des in Figur 5 dargestellten Systems entspricht dem Kältekreis des Systems von Figur 1 und wird daher nicht erneut erläutert.

Der Wärmeträgerkreis 30 des Systems von Figur 5 weist jedoch im Vergleich zu den bisher erläuterten Ausführungsformen eine erweiterte Funktionalität auf, da der Latentspeicher bei dieser Ausführungsform wahlweise zur Speicherung von Wärme oder Kälte verwendet werden kann.

Bei dem System gemäß Figur 5 umfasst der Wärmeträgerkreis eine Wärmeträgerpumpe 54, den ersten Wärmetauscher 18, den zweiten Wärmetauscher 34, ein Wärmeträgerheizgerät 28 sowie ein erstes Wärmeträgerventil 64, ein zweites Wärmeträgerventil 66 und ein drittes Wärmeträgerventil 68, wobei der Wärmeträgerkreis 30 über das zweite Wärmeträgerventil 66 und das dritte Wärmeträgerventil 68 mit einem nur schematisch angedeuteten Motorkühlkreis 32 verbunden werden kann. Bei geöffnetem zweitem Wärmeträgerventil 66 strömt heißes Kühlmittel aus dem Motorkühlkreis 32 durch den zweiten Wärmetauscher 34, so dass in dem Latentspeicher 20 Wärme gespeichert werden kann. Gleichzeitig kann bei geöffnetem drittem Wärmeträgerventil 68 und aktiver Wärmeträgerpumpe 54 auch der erste Wärmetauscher 18 von heißem Kühlmittel durchströmt werden, so dass der hintere Bereich des Innenraums beheizt werden kann. Selbstverständlich ist es ebenfalls möglich, bei geöffnetem drit tem Wärmeträgerventil 68 das erste Wärmeträgerventil 64 und das zweite Wärmeträgerventil 66 zu schließen, so dass nur der erste Wärmetauscher 18 von dem heißen Kühlmittel durchströmt wird. Um in dem Latentspeicher 20 gespeicherte Wärme zum Beheizen des hinteren Bereichs des Innenraums zu verwenden, sind prinzipiell zwei Möglichkeiten vorhanden. Sofern die in dem Latentspeicher 20 gespeicherte Wärme zum Beheizen des hinteren Bereichs ausreichet, wird das erste Wärmeträgerventil 64 geschlossen und das zweite Wärmeträgerventil 66 wird ebenso wie das dritte Wärmeträgerventil 68 geöffnet. Bei aktiver Wärmeträgerpumpe 54 erfolgt somit eine Wärmeträgerzirkulation zwischen dem ersten Wärmetauscher 18 und dem zweiten Wärmetauscher 34, so dass in dem Latentspeicher 20 gespeicherte Wärme über den ersten Wärmetauscher 18 abgegeben werden kann. Wenn die in dem Latentspeicher 20 gespeicherte Wärme nicht zum Beheizen des hinteren Bereichs ausreicht, kann die gespeicherte Wärme dennoch in vorteilhafter Weise genutzt werden, um die Vorlauftemperatur eines Wärmeträgerheizgerätes 28 zu erhöhen, das über eine eigene nicht dargestellte Wärmeträgerpumpe verfügt. In diesem Fall wird das erste Wärmeträgerventil 64 geöffnet und das zweite Wärmeträgerventil 66 wird ebenso wie das dritte Wärmeträgerventil 66 geschlossen. Bei aktiver Pumpe des Wärmeträgerheizgerätes 28 wird dem Wärmeträgerheizgerät 28 somit durch den Latentspeicher 20 vorgewärmter Wärmeträger zugeführt und dort weiter erwärmt, bevor der Wärmeträger den ersten Wärmetauscher 18 passiert und dort Wärme abgibt.

Das Be- und Entladen des Latentspeichers 20 mit Kälte erfolgt bei dem System gemäß Figur 5 (bei geschlossenem erstem Wärmeträgerventil 64) wie bei dem System von Figur 1 und wird daher nicht erneut erläutert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: erstes Klimagerät
- 12: zweites Klimagerät
- 14: erster Verdampfer
- 16: zweiter Verdampfer
- 18: erster Wärmetauscher
- 20: Latentspeicher
- 22: dritter Verdampfer
- 24: Luftströmungsrichtung
- 26: Luftheizgerät
- 28: Wärmeträgerheizgerät
- 30: Wärmeträgerkreis
- 32: Motorkühlkreis
- 34: zweiter Wärmetauscher
- 36: erstes Gebläse
- 38: zweites Gebläse
- 40: Kondensatorgebläse
- 42: Kompressor
- 44: Kondensator
- 46: Sammler/Trockner
- 48: erstes Expansionsorgan
- 50: zweites Expansionsorgan
- 52: drittes Expansionsorgan
- 54: Wärmeträgerpumpe
- 56: Rückschlagventil
- 58: erstes Ventil
- 60: zweites Ventil
- 62: drittes Ventil
- 64: erstes Wärmeträgerventil
- 66: zweites Wärmeträgerventil
- 68: drittes Wärmeträgerventil
- 70: dritter Wärmetauscher

## Patentansprüche

1. System zum Heizen und Kühlen eines Innenraums eines Fahrzeugs, mit einem ersten Klimagerät (10), das dazu vorgesehen ist, einen vorderen Bereich des Innenraums zu heizen oder zu kühlen, und mit einem zweiten Klimagerät (12), das dazu vorgesehen ist, einen hinteren Bereich des Innenraums zu heizen oder zu kühlen, wobei in dem ersten Klimagerät (10) ein mit einem Kältekreis verbindbarer erster Verdampfer (14) und in dem zweiten Klimagerät (12) ein mit dem Kältekreis verbindbarer zweiter Verdampfer (16) vorgesehen ist, **dadurch gekennzeichnet, dass** in dem zweiten Klimagerät (12) weiterhin ein erster Wärmetauscher (18) vorgesehen ist, der über einen Wärmeträgerkreis (30) mit einem Latentspeicher (20) in Verbindung steht, der von einem mit dem Kältekreis verbindbaren dritten Verdampfer (22) mit Kälte geladen werden kann.

2. System nach Anspruch 1, **dadurch gekennzeichnet, dass** aus der Gruppe des ersten Verdampfers (14), des zweiten Verdampfers (16) und des dritten Verdampfers (22) zumindest zwei Verdampfer bezogen auf eine Kältemittelströmungsrichtung parallel angeordnet sind.

3. System nach Anspruch 1 oder 2, **dadurch gekennzeichnet, dass** der erste Verdampfer (14), der zweite Verdampfer (16) und der dritte Verdampfer (22) bezogen auf eine Kältemittelströmungsrichtung parallel angeordnet sind.

4. System nach einem der vorhergehenden Ansprüche, **dadurch gekennzeichnet, dass** der erste Wärmetauscher (18) und der zweite Verdampfer (16) bezogen auf eine Luftströmungsrichtung (24) in Reihe angeordnet sind.

5. System nach einem der vorhergehenden Ansprüche, **dadurch gekennzeichnet, dass** zum Beheizen des hinteren Bereichs ein Luftheizgerät (26) vorgesehen ist.

6. System nach Anspruch 5, **dadurch gekennzeichnet, dass** das Luftheizgerät (26) dem zweiten Klimagerät (12) zugeordnet ist.

7. System nach einem der vorhergehenden Ansprüche, **dadurch gekennzeichnet, dass** es den ersten Wärmetauscher (18) zum Beheizen des hinteren Bereichs verwenden kann.

8. System nach einem der vorhergehenden Ansprüche, **dadurch gekennzeichnet, dass** in dem zweiten Klimagerät (12) ein dritter Wärmetauscher (70) zum Beheizen des hinteren Bereichs vorgesehen ist.

9. System nach einem der vorhergehenden Ansprüche, **dadurch gekennzeichnet, dass** zum Beheizen des hinteren Bereichs ein Wärmeträgerheizgerät (28) vorgesehen ist, das in den Wärmeträgerkreis (30) einbindbar ist.

10. System nach einem der vorhergehenden Ansprüche, **dadurch gekennzeichnet, dass** es einem Motorkühlkreis (32) zum Beheizen des hinteren Bereichs Wärme entziehen kann.

11. System nach einem der vorhergehenden Ansprüche, **dadurch gekennzeichnet, dass** in dem Latentspeicher (20) wahlweise Wärme oder Kälte gespeichert werden kann, und dass in dem Latentspeicher (20) gespeicherte Wärme zum Beheizen des hinteren Bereichs verwendet werden kann.

12. System nach Anspruch 11, **dadurch gekennzeichnet, dass** der Latentspeicher (20) zur Speicherung von Wärme mit einem Motorkühlkreis (32) koppelbar ist.

13. System nach Anspruch 11 oder 12, **dadurch gekennzeichnet, dass** der Latentspeicher einen zweiten Wärmetauscher enthält, über den wahlweise Wärme zugeführt, Wärme abgeführt oder Kälte abgeführt werden kann.
